# EUROPEAN PATENT APPLICATION

(11) **EP 4 140 700 A1**
(43) Date of publication of application: **01.03.2023**
(21) Application number: 21193473.2
(22) Date of filing: 27.08.2021
(51) Int. Cl.: B29C 65/00, B29C 65/08, B29C 65/48, B29C 65/50, B29L 31/30

(54) **METHOD AND SYSTEM FOR CONTINUOUS WELDING OF COMPOSITE PARTS FORMING A SCARFED JOINT, AND AIRCRAFT**

(71) Applicant: Airbus Operations GmbH, 21129 Hamburg (DE); AIRBUS OPERATIONS (S.A.S.), 31060 Toulouse (FR)
(72) Inventor: Vichniakov, Alexei, 21129 Hamburg (DE); Goncharova, Galyna, 31060 Toulouse (FR)
(74) Representative: KASTEL Patentanwälte PartG mbB

(57) **Abstract**

A method and a system for continuous welding of composite parts forming a scarfed joint are provided. The method comprises providing at least a first part (11) and a second part (12), both made of thermoplastic material, each part comprising a stepped section in which at least one step (14, 16) extending in a welding direction (L) is formed. Both parts (11, 12) are joined in a way that their stepped sections overlap each other, wherein their steps (14, 16) are on opposite sides and extend in the same welding direction (L). A welding force (F1) is applied by a welding device (13) from one side on at least one step (14) of the first part (11) while welding energy is provided, wherein the welding force (F1) and the welding energy are progressing in the welding direction (L). A counterforce (F2) is applied by movable rolls (17) from the opposite side on at least one step (16) of the second part (12), wherein the counterforce (F2) is progressing in the welding direction (L) in accordance with the progressing welding force (F1).

## Description

The invention relates to a method for continuous welding of composite parts forming a scarfed joint. Further, the invention relates to a welding system for continuous welding of composite parts forming a scarfed joint, and to an aircraft. In particular, the invention relates to ultrasonic welding, but it is also applicable to other joining methods.

A growing number of components or parts of modern aircrafts is made of thermoplastic materials. Quite often such parts are welded together, like e.g. different sections of a fuselage or different other parts of the aircraft. At the joint of two components or parts, like e.g. an upper half and a lower half of a fuselage, relatively strong bending moments may occur, for example due to the inner pressure of the fuselage during flight.

In order to reduce the bending moments, the parts to be welded have a scarfed portion at their edges which shall be connected to the other part which has such a scarfed design as well. The scarfed design allows reduction of the skin thickness and thus a smooth transition from one part to the other, for example from one shell to another shell of the fuselage, e.g. from an upper shell to a lower shell of the fuselage. In this way, the scarfed design results in a better mechanical connection of both parts, which are e.g. formed as laminates

It is the object of the invention to provide a welding system and a welding method for welding composite parts having a scarfed design, which allow a highly automated and fast welding process and which result in a high strength of the scarfed joint.

The object is achieved by the subject matter according to the independent claims. Advantageous embodiments are subject matter of the dependent claims.

According to a first aspect, the invention provides a method for continuous welding of composite parts forming a scarfed joint, comprising:
providing at least a first part and a second part, both made of thermoplastic material, each part comprising a stepped section in which at least one step extending in a welding direction is formed; joining both parts in a way that their stepped sections overlap each other, wherein their steps are on opposite sides and extend in the same welding direction; applying a welding force from one side on at least one step of the first part while welding energy is provided, wherein the welding force and the welding energy are progressing in the welding direction; and applying a counterforce from the opposite side on at least one step of the second part, wherein the counterforce is progressing in the welding direction in accordance with the progressing welding force.

Thermoplastic materials can e.g. be without any reinforcements, but they can also be reinforced with short, continuous or endless fibers. The reinfocement fibers can e.g. be made from carbon materials, but can e.g. also be made from glass and other fiber materials, including biosource materials.

Preferably, ultrasonic welding is performed, wherein the welding energy is provided e.g. by acoustic energy transformed into thermal heating, i.e. melding is caused by acoustic vibrations. But it is not limited thereto, since also other welding methods are possible, like e.g. induction welding, laser beam welding or other welding processes.

The invention achieves a highly automated and fast welding process, which results in a high strength of the scarfed joint.

Preferably, the counterforce is applied by a movable roll progressing in the welding direction. Longitudinal and also circumferential joints can be created.

Preferably two or more rolls are progressing in the welding direction for applying the counterforce.

Preferably, the rolls are arranged as a central roll and at least one side roll arranged on a side or on each side of the central roll. For example, only two rolls are possible.

Preferably, the total width of the plurality of rolls applying the counterforce is greater than the width of the welding force applied e.g. by a welding device on the one or more steps of the first part.

Preferably, at least one progressing roll is acting on the first part on a side opposite to the side on which the welding force is applied.

Preferably, the welding energy is provided by a sonotrode for ultrasonic welding. The sonotrode can e.g. be monolithic, but also a rotated sonotrode is possible. The sonotrode may have one head or multiple heads. Also, an additional heating of sonotrode, counterforce devices or joining parts before or during the welding is possible. Some of the areas of sonotrode, counterforce devices or joining parts before or during the welding can be cooled for prevention of deconsolidation. The cooling can e.g. be applied by air, water or other cooling mediums.

Preferably, both joining parts comprise a plurality of overlapping layers forming the steps.

Preferably, the method is used for welding together different parts of an aircraft, in particular shells of a fuselage.

According to another aspect, the invention provides a welding system for continuous welding of composite parts forming a scarfed joint, wherein the parts to be welded are made of thermoplastic material and comprise a stepped section in which at least one step extending in a welding direction is formed, the welding system comprising: a welding device designed for applying welding energy and a welding force from one side on at least one step provided in the first part, and for progressing along the welding direction of the step; and a counterforce device comprising at least one movable roll designed for applying a counterforce from the opposite side on at least one step provided in the second part, and for progressing along the welding direction of the step in accordance with the opposing progressing welding force.

The welding device is in particular designed for ultrasonic welding and may e.g. comprise a sonotrode for providing the welding energy by acoustic vibrations. But it may also be designed for other types of welding, like e.g. induction welding, laser beam welding or other welding processes.

Both parts may for example comprise a plurality of overlapping layers forming the steps. In particular, each layer can e.g. be formed as a lamination comprising a plurality of lamination layers.

Preferably, the counterforce device comprises an arrangement of two or more movable rolls for progressively acting on a plurality of different steps of the second part. In particular, each roll is designed for acting on one step.

The multiple rolls lead to a counterforce which is e.g. distributed along the width of the overlapping portions or sections of both parts. They also allow to increase the size of the welding device and in particular of a sonotrode, up to the complete width of the joint.

Advantageously, the multiple rolls generate a full-line counterforce which compensates a possible misalignment of the joined or connected parts. Such misalignment leading to tolerances for the overlapping portions of the parts can hardly be avoided when both parts are attached to each other for welding. This is quite usual in particular when the parts are relatively large compared to the width of the joint, as for example in the case of welding together fuselage sections.

Preferably, at least one movable roll of the counterforce device is designed for acting on the first part on a side opposite to the side on which the welding force is applied during welding.

Preferably, the movable rolls are arranged side by side for progressing parallel to each other along with the progressing welding force.

Preferably, the width of the roll arrangement is greater than the width of the progressing welding force provided by the welding device.

Preferably, each roll is adapted to or corresponds to the width of the step on which it shall be applied during welding.

Preferably, each roll has a width which is equal to or greater than the width of the progressing welding device acting with a welding force on the first part.

Preferably, the counterforce device comprises a central roll and at least two further rolls arranged on both sides of the central roll.

Preferably, the welding system is designed for being used in a method according to the invention.

According to a further aspect, the invention provides an aircraft comprising one or more components which are welded by the method and/or the welding system according to the invention.

The invention provides the application of a counterforce for continuous welding of scarfed joints.

The invention achieves that the counterforce is always at the location where the welding energy and the welding force is applied and progressing. Thus, a high pressure can be applied on both parts from opposite sides at that location in a continuous welding process which allows longitudinal joints.

Further, the invention provides a solution for compensating tolerances of adjacent shells or other parts when they are positioned before welding. Such positioning tolerances might be e.g. +/-10 mm and more for large parts like e.g. fuselage sections. The compensation of tolerances allows to significantly increase the width of the welded joints. In particular, a misalignment of the joined parts can be compensated by the full-line counterforce extending over the width of the joint, which is achieved by the invention. The welding system provides the necessary counterforces to the welding force even in the case of relatively large misalignments, in particular by the multiple roll arrangement

By the invention, the overlap of the parts during welding can be essentially increased and full-area welding can be achieved.

Further, the multiple rolls counterparts formed by the counterforce device can be applied for welding of a plurality of welded raws, preferably three or more. Only sonotrode change the raw alignment.

The invention can be applied for different continuous welding methods, like e.g. ultrasonic welding, induction welding, laser beam welding, and other processes.

Details and advantages described with reference to the welding method according to the invention also apply to the welding system according to the invention and vice versa.

Embodiments of the invention are described in more detail with reference to the accompanying drawings.
- **Fig. 1**: depicts a schematic side view of a welding system according to a preferred embodiment of the invention during welding of two parts;
- **Fig. 2**: depicts a schematic side view of the welding system during the welding, in the viewing direction A indicated in Fig. 1;
- **Fig. 3**: depicts a schematic side view as shown in Fig. 1 when the two parts are misaligned, resulting in a smaller overlap than shown in Fig. 1;
- **Fig. 4**: depicts a schematic side view as shown in Fig. 1 when the two parts are misaligned, resulting in a greater overlap than shown in Fig. 1;
- **Fig. 5**: depicts a sectional view of two shells of a fuselage of an aircraft welded together according to the welding method of the invention; and
- **Fig. 6**: depicts a longitudinal joint with welded parts formed by laminates having a plurality of laminate layers.

For similar elements in the drawings or elements having the same function, the same reference numbers are used in the different drawings and embodiments described herein. Their description will only be repeated if it seems useful.

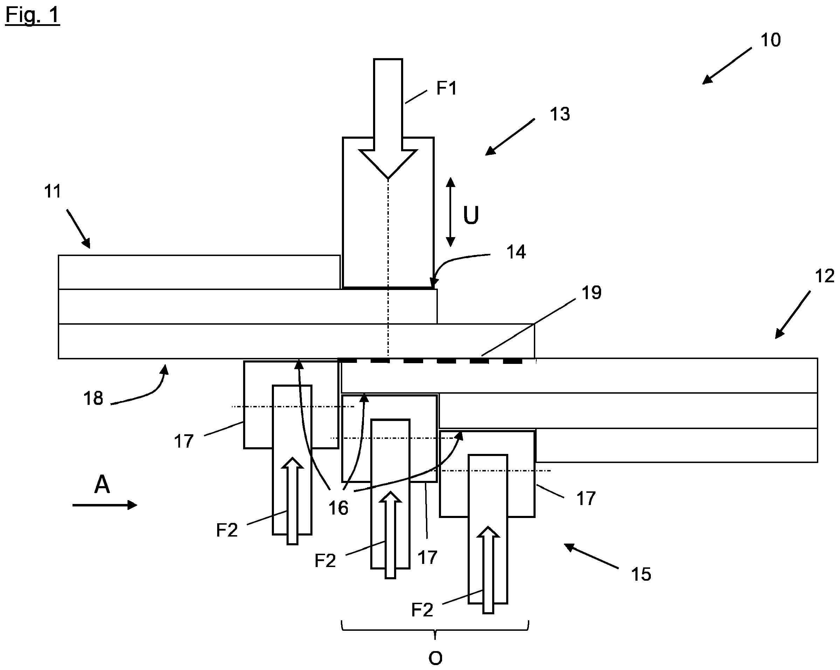

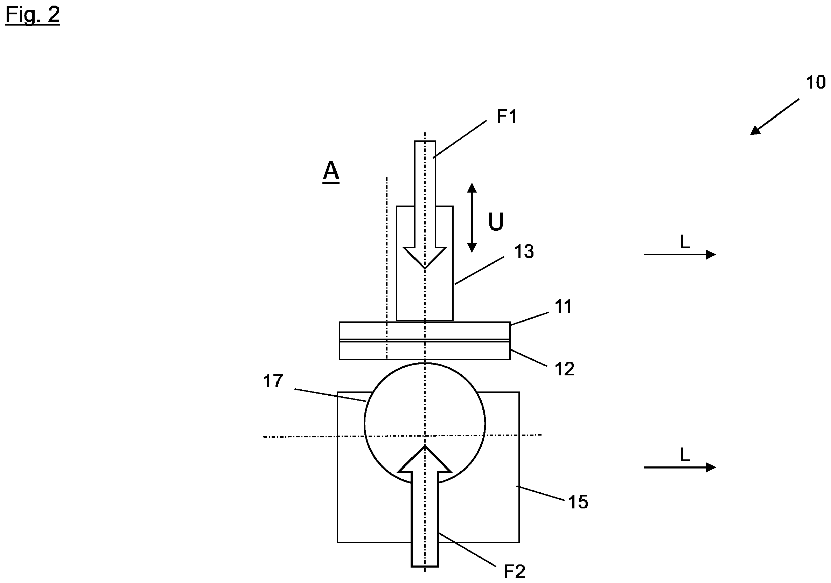

Reference is made to **Figs. 1** **and** **2****,** which show a welding system 10 according to preferred embodiment of the invention during welding of two components or parts 11, 12 according to an example of the method according to the invention. **Fig. 1** shows schematically a section of a front view of the arrangement, while **Fig. 2** shows a schematic side view of the arrangement in the viewing direction A indicated in Fig. 1.

The welding system 10 is designed or continuously welding the first part 11 to the second part 12, each part 11, 12 being made of thermoplastic material and having a scarfed portion for welding, such that a scarfed joint comprising steps is formed.

The system comprises a welding device 13 for generating welding energy and applying a welding force F1 from one side to a step 14 provided in the first part 11, while progressing in a longitudinal welding direction L of step 14 as indicated in Fig. 2. In this example the welding force F1 is applied from the upper side on step 14. The welding device 13 of this embodiment comprises a sonotrode or is formed as a sonotrode providing the welding energy by ultrasonic vibrations U, which in this example are perpendicular to the surface of the step 14 on which they are applied. However, the vibrations may also be in a direction parallel to that surface or in another direction.

The welding system 10 further comprises a counterforce device 15 comprising movable rolls 17 for applying a counterforce F2 on steps 16 provided by the second part 12 from the opposite side. During welding, the counterforce device 15 is progressing with its rolls 17 on steps 16 in their longitudinal direction L, which is identical to the longitudinal direction of step 14 of the first part 12. The counterforce F2 progresses along step 16 in accordance with the opposing welding force F1, i.e. in a parallel direction and at the same speed.

Thus, both parts 11, 12 are pressed together during welding through the opposing forces F1, F2 acting on the steps 14 and 16 respectively from two opposite directions. In this way a weldline 19 is continuously formed between the parts 11, 12 during welding.

In the embodiment of the welding system 10 and the example of the welding method shown here, the counterforce device 15 comprises three movable rolls 17, wherein two of them act on two different steps 16 formed in the second part 12, and one of them, i.e. the left movable roll 17 in the figure, is acting on the underside 18 of the first part 11 which is opposite to the side of first part 11 on which the welding device 13 presses.

In other embodiments of the welding system 10 and examples of the welding method, which are not shown here, the counterforce device 15 has only one roll 17 in order to act on only one step 16 of the second part 12, or it has more than two rolls acting on a corresponding number of steps 16 formed in the second part 12.

According to further embodiments and examples, all movable rolls 17 are acting on the steps formed in the second part, i.e. none of the rolls 17 is acting on the underside 18 of first part 11.

According to still further embodiments, more than one roll 17 is provided for acting on the first part 11 at its underside 18, in addition to the roll or rolls 17 acting on step or steps 16 of the second part 12.

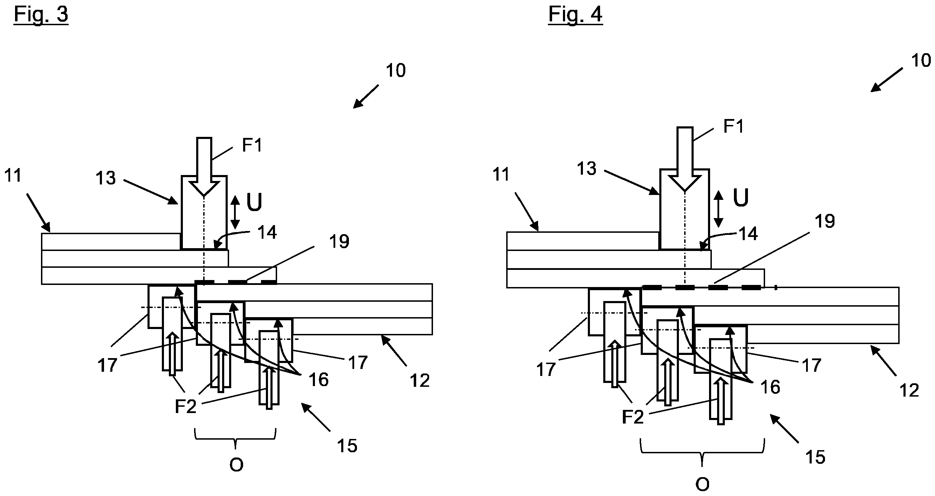

**Figs. 3 and 4** show schematically a sectional view of the welding system 10 during the welding similar to Fig. 1, however the parts 11, 12 show a misalignment relative to each other in that section, such that the steps 16 provided by the second part 12 when attached to the first part 11 are not centered in this section relative to the step 14 of the first part 11, to which the welding force F1 is applied.

In **Fig. 3****,** the second part 12 is out of center to the right side in the figure, resulting in a smaller overlap O when compared to that of Fig. 1, whereas in **Fig. 4** the second part 12 is a bit out of center to the left side in the figure, resulting in a larger overlap when compared to that of Fig. 1. Such tolerances or misalignments can usually occur when two parts are welded together. They may essentially depend on the length of the joint between both parts.

As can be seen from the figures, the welding system 10 still provides the counterforces F2 in areas or portions which are located opposite to the welding device 11. Thereby the misalignments are compensated, thus ensuring a strong welding joint, despite the misalignments, and independent of their directions.

For further details shown in Figs. 3 and 4, reference is made to the description of Fig. 1.

In the following, a welding method according to a preferred example of the invention will be is described with reference to any of **Figs. 1****,** **3 or 4****.** The method is designed for continuous welding composite parts to form a longitudinally extending scarfed joint, in particular when misalignments can occur due to the positioning of the parts 11, 12.

At the beginning, a first part 11 and a second part 12, both made of thermoplastic material, are provided for being welded. Each part 11, 12 has a stepped section comprising at least one step 14, 16, which extends in the longitudinal direction L.

In a next step, both parts 11, 12 are joined such that their stepped sections overlap each other. They are positioned in a way that their steps 14, 16 are on opposite sides and extend in the same longitudinal direction. A soft layer not shown in the figures is placed in the overlap region O between the first and the second part 11, 12, which is made of a thermoplastic material, preferably the matrix material of the parts 11, 12.

Then, a progressing welding force F1 is applied by welding device 13 from one side on step 14 of the first part 11, while the welding device 13 also provides welding energy to the parts 11, 12. The welding force F1 and the welding energy are progressing in the longitudinal direction L of the steps 14, 16 because of the movement of welding device 13 relative to the parts 13, 14. The welding energy is generated to locally heat the soft layer placed between both parts 11, 12 at the position of the progressing welding force F1 during the continuous movement of the welding device 13 on step 14.

At the same time, counterforce F2 is applied by rolls 17 of counterforce device 13, which rolls 17 are acting from the opposite side on steps 16 of the second part 12. The counterforce F2 is progressing with its rolls 17 in the longitudinal direction L, together or in accordance with the progressing welding force F1.

Thereby both parts 11, 12 are pressed together through the opposing forces F1, F2 acting on the steps 14, 16 of both parts 11, 12 at the positions where the welding energy is applied by the welding device 13 during its movement relative to the overlapping parts 11, 12.

The rolls 17 which are arranged side by side progress parallel to each other on steps 16, i.e. they move along with the progressing welding force F1. Each roll 17 moves on one step 16 to which it is assigned and applies the counterforce F2 to that step, thereby pressing together the parts 11, 12 at the position of the rolls and the opposing welding device 13.

The counterforce F2 provided by the counterforce device 15 is in this example e.g. about 1000 N.

In this example, the welding energy is provided by ultrasonic vibrations U transmitted to the joint between both parts 11, 12, where a soft layer of thermoplastic matrix material is positioned and heated by the welding energy. The soft layer may have a thickness of e.g. 0,1 mm and is not shown in the figures. The vibrations may have a frequency of e.g. about 20 kHz.

The thermoplastic material of parts 11, 12 is preferably a high performance thermoplastic material having a high melting temperature like e.g. 300 °C or more. The soft layer is preferably made of the same thermoplastic material or the matrix material of the parts 11, 12.

During welding, the components or parts 11, 12 become fixedly connected or joined by a weldline 19 between overlapping sections of the parts 11, 12. The weldline 19 has a width corresponding to or identical to the overlap O of both parts 11, 12, and it extends in the longitudinal direction L, which is perpendicular to the image plane of Fig. 1 and indicated in Fig. 2.

In the situation shown in the figures, the overlap length O is the sum of the widths of the two rolls 17 on the right side in the figure, which are acting on the steps 16 formed in second part 12. That width is greater than the width of the welding force F1.

Also the width of the roll arrangement comprising all rolls 17, including the roll acting on the underside 18 of the first part 11, is greater than the width of the welding force F1 provided by the welding device 13 and acting on step 14 of the first part 11.

The width of each step 14, 16 formed in the scarfed sections of parts 11, 12 is e.g. 30 mm, and the height of each step 14, 16 is e.g. 1 mm. The total thickness of each part 11, 12 is e.g. 3 mm. Both parts 11, 12 comprise a number of layers as indicated in figures 1 to 4

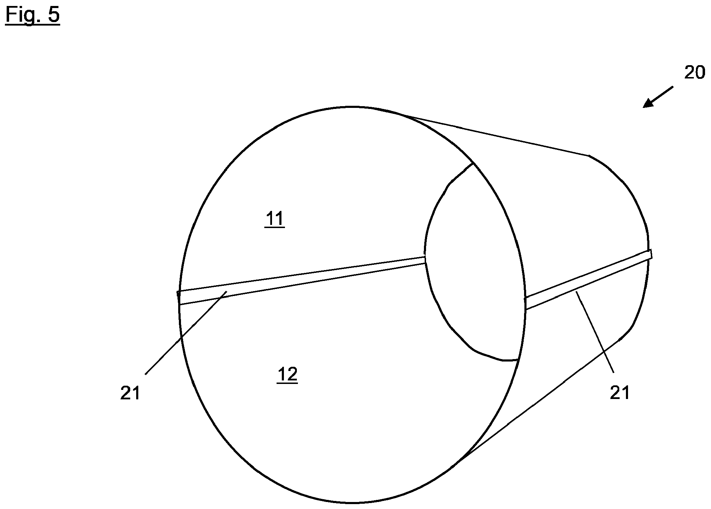

The parts 11, 12 are e.g. formed as two shells of a fuselage 20 of an aircraft, as shown in **Fig. 5****.** Here, one shell 11 is formed as an upper half, and the other shell is formed as a lower half of the fuselage 20. Both shells or components 11, 12 are welded in overlapping portions 21 on both sides of the fuselage. Both shells are scarfed in the overlapping portions 21, i.e. steps 14, 16 are formed there as described above. The fuselage 20 in this example has a diameter of about 4 m, and a length of about 8 m.

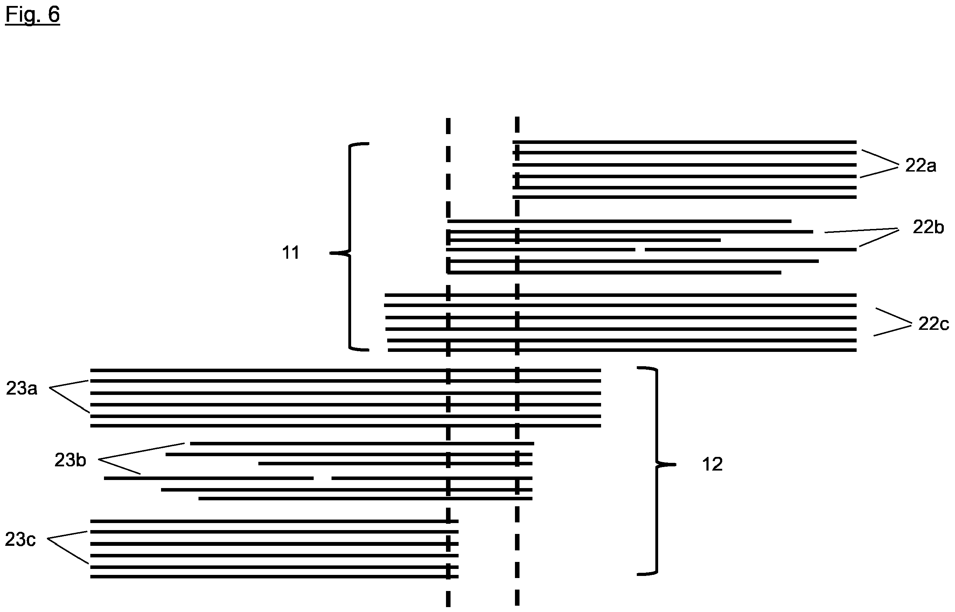

**Fig. 6** shows further details of the parts 11, 12, which comprise a plurality of laminate layers 22a-c and 23a-c forming a joint by the welding method described above. In this example, three groups of laminate layers 22a, 22b, 22c form the first part 11 which is a skin crown, and three groups of laminate layers 23a, 23b, 23c form the second part 12 which is a skin keel 24. The laminate layers in each group have different orientations. The number and grouping of the laminate layers can be adapted according to specific requirements. Skin crown 11 and skin keel 12 are overlapping and welded by the method described above.

### List of reference signs:

- 10: welding system
- 11: first part / skin crown
- 12: second part / skin keel
- 13: welding device
- 14: step provided in first part
- 15: counterforce device
- 16: step provided by second part
- 17: movable roll
- 18: underside of first part
- 19: weldline
- 20: fuselage
- 21: overlapping section
- 22a-c: laminate layers
- 23a-c: laminate layers

- A: viewing direction
- F1: welding force
- F2: counterforce
- J: joint
- L: welding direction or longitudinal direction
- O: overlap
- U: ultrasonic vibrations

## Claims

1. Method for continuous welding of composite parts forming a scarfed joint, comprising
- providing at least a first part (11) and a second part (12), both made of thermoplastic material, each part comprising a stepped section in which at least one step (14, 16) extending in a welding direction (L) is formed;
- joining both parts (11, 12) in a way that their stepped sections overlap each other, wherein their steps (14, 16) are on opposite sides and extend in the same welding direction (L);
- applying a welding force (F1) from one side on at least one step (14) of the first part (11) while welding energy is provided, wherein the welding force (F1) and the welding energy are progressing in the welding direction (L);
- applying a counterforce (F2) from the opposite side on at least one step (16) of the second part (12), wherein the counterforce (F2) is progressing in the welding direction (L) in accordance with the progressing welding force (F1).

2. Method according to claim 1, wherein the counterforce (F2) is applied by two or more movable rolls (17) progressing in the welding direction (L).

3. Method according to claim 2, wherein the rolls (17) are arranged as a central roll and at least one side roll arranged on a side of the central roll.

4. Method according to claims 2 or 3, wherein the total width of the plurality of rolls (17) applying the counterforce (F2) is greater than the width of the welding force (F1) applied on the one or more steps (14) of the first part (11).

5. Method according to any of claims 2 to 4, wherein at least one progressing roll (17) is acting on the first part (11) on a side opposite to the side on which the welding force (F1) is applied.

6. Method according to any of the preceding claims, wherein the welding energy is provided by a sonotrode for ultrasonic welding.

7. Method according to any of the preceding claims, wherein both parts (11, 12) comprise a plurality of overlapping layers forming the steps (14, 16).

8. Welding system for continuous welding of composite parts forming a scarfed joint, wherein the parts (11, 12) to be welded are made of thermoplastic material and comprise a stepped section in which at least one step (14, 16) extending in a welding direction (L) is formed, comprising:
a welding device (13) designed for applying welding energy and a welding force (F1) from one side on at least one step (14) provided in the first part (11), and for progressing along the welding direction (L) of the step (14); and
a counterforce device (15) comprising at least one movable roll (17) designed for applying a counterforce (F2) from the opposite side on at least one step (16) provided in the second part (12), and for progressing along the welding direction (L) of the step (16) in accordance with the opposing progressing welding force (F1).

9. Welding system according to claim 8, wherein the counterforce device (15) comprises an arrangement of two or more rolls (17) for progressively acting on different steps (16) of the second part (12).

10. Welding system according to claim 9, wherein the width of the roll arrangement is greater than the width of the progressing welding force (F1) provided by the welding device (13).

11. Welding system according to any of claim 8 to 10, wherein the counterforce device (15) comprises a central roll (17) and at least two further rolls (17) arranged on both sides of the central roll (17).

12. Welding system according to any of the preceding claims, wherein the rolls (17) are arranged side by side for progressing parallel to each other on their assigned steps (16) along with the progressing welding force (F1).

13. Welding system according to any of the preceding claims, wherein the width of each roll (17) corresponds to the width of the step (16) on which it is acting during welding.

14. Welding system according to any of the preceding claims, designed for being used in a method according to any of claims 1 to 8.

15. Aircraft, comprising one or more components (20) which are welded by the method according to any of claims 1 to 7 and/or by using the welding system (10) according to any of claims 8 to 14.
